# EUROPEAN PATENT APPLICATION

(11) **EP 3 266 749 A1**
(43) Date of publication of application: **10.01.2018**
(21) Application number: 16758578.5
(22) Date of filing: 15.01.2016
(51) Int. Cl.: C02F 1/42, B01J 47/12, B01J 49/00

(54) **WATER TREATMENT APPARATUS AND OPERATION METHOD FOR WATER TREATMENT APPARATUS**

(30) Priority: 04.03.2015 JP 2015042213
(71) Applicant: Panasonic Intellectual Property Management Co., Ltd., Osaka-shi, Osaka 540-6207 (JP)
(72) Inventor: SASABE, Shigeru, Osaka-shi Osaka 540-6207 (JP); SUZUKI, Daisuke, Osaka-shi Osaka 540-6207 (JP); OOE, Yoshinao, Osaka-shi Osaka 540-6207 (JP); TANI, Tomoko, Osaka-shi Osaka 540-6207 (JP); UNO, Katsuhiko, Osaka-shi Osaka 540-6207 (JP)
(74) Representative: Eisenführ Speiser
(86) International application number: PCT/JP2016/000183
(87) International publication number: WO 2016/139877

(57) **Abstract**

A water treatment apparatus of the present disclosure includes an electrochemical cell provided with an inlet and an outlet, a power supply that supplies electric power to electrodes, a first water flow path connected with the inlet, a second water flow path connected with the outlet, a soft water supply unit that feeds soft water to the inlet, and a flow adjustor that regulates a flow rate of water passing through the second water flow path. The water treatment apparatus further includes a controller that controls electric power supplied from the power supply to the electrodes, the flow rate of water passing through the second water flow path by use of the flow adjustor, and soft water fed to the inlet by use of the soft water supply unit when a process for regenerating the electrochemical cell is executed. As a result, the apparatus can reduce the hardness and electric conductivity of water fed into the electrochemical cell during regeneration of an ion exchange membrane and restrain scale formation.

## Description

### TECHNICAL FIELD

The present disclosure relates to a water treatment apparatus and a method for operating the water treatment apparatus.

### BACKGROUND ART

A water treatment apparatus is an apparatus that includes an ion-exchange resin disposed between electrodes and absorbs cations or anions into the ion-exchange resin to remove impurities from an aqueous solution. It is known that a water treatment apparatus having this configuration is provided with a variable voltage supply capable of maintaining electrodes at a plurality of voltage levels during an ion exchange stage (e.g., refer to PTL 1).

The apparatus disclosed in PTL 1 can control the concentration of ions in an effluent solution flowing out of the apparatus by maintaining the electrodes at a plurality of voltage levels.

Unfortunately, the apparatus disclosed in PTL 1 still has room for improvement in terms of restraint on scale formation when the ion exchange membrane is regenerated.

### Citation List

### Patent Literature

PTL1: Unexamined Japanese Patent Publication No. 2007-501702

### SUMMARY OF THE INVENTION

The present disclosure has been accomplished to solve the conventional problem described above. It is an object of the present disclosure to provide a water treatment apparatus that can restrain scale formation at the time of regeneration of an ion exchange membrane. It is another object of the present disclosure to provide a method for operating such a water treatment apparatus.

In order to solve the conventional problem, a water treatment apparatus of the present disclosure includes an electrochemical cell including: a casing provided with an inlet and an outlet; a pair of electrodes that is disposed in the casing and forms an anode and a cathode opposing each other; and an ion exchange membrane that is disposed between the anode and the cathode and has a cation exchange substrate and an anion exchange substrate. The water treatment apparatus further includes a power supply that supplies electric power to the electrodes, a first water flow path connected with the inlet, a second water flow path connected with the outlet, a soft water supply unit that feeds soft water to the inlet, and a flow adjustor that is provided on the second water flow path and regulates a flow rate of water passing through the second water flow path. The water treatment apparatus further includes a controller that controls electric power supplied from the power supply to the electrodes, the flow rate of water passing through the second water flow path by use of the flow adjustor, and the soft water fed to the inlet through the soft water supply unit when a process for regenerating the anion and the cation exchange substrates is executed.

This configuration can reduce the hardness and electric conductivity of water fed into the electrochemical cell during regeneration of the ion exchange membrane. As a result, the apparatus can restrain scale formation.

In a method for operating a water treatment apparatus of the present disclosure, the water treatment apparatus includes an electrochemical cell including: a casing provided with an inlet and an outlet; a pair of electrodes that is disposed in the casing and forms an anode and a cathode opposite to each other; and an ion exchange membrane that is disposed between the anode and the cathode and has a cation exchange substrate and an anion exchange substrate. The water treatment apparatus further includes a power supply that supplies electric power to the electrodes, a first water flow path connected with the inlet, a second water flow path connected with the outlet, a soft water supply unit that feeds soft water to the inlet, and a flow adjustor that is provided on the second water flow path and regulates a flow rate of water passing through the second water flow path. The method includes a step A of adjusting electric power supplied from the power supply to the electrodes, a step B of regulating the flow rate of water passing through the second water flow path by use of the flow adjustor, and a step C of feeding the soft water to the inlet by use of the soft water supply unit.

This configuration can reduce the hardness and electric conductivity of water fed into the electrochemical cell during regeneration of the ion exchange membrane. As a result, the apparatus can restrain scale formation.

These and other objects, features and advantages of the present disclosure will become apparent with reference to the accompanying drawings, and the following detailed description of the preferred exemplary embodiments.

A water treatment apparatus of the present disclosure can restrain scale formation at the time of regeneration of an ion exchange membrane.

### BRIEF DESCRIPTION OF DRAWINGS

FIG. 1 is a schematic view illustrating a configuration of a water treatment apparatus according to a first exemplary embodiment.
FIG. 2 is a schematic view illustrating a configuration of a water treatment apparatus according to a first modification example of the first exemplary embodiment.
FIG. 3 is a schematic view illustrating a configuration of a water treatment apparatus according to a second exemplary embodiment.
FIG. 4 is a schematic view illustrating a configuration of a water treatment apparatus according to a third exemplary embodiment.
FIG. 5 is a flowchart illustrating a procedure conducted by the water treatment apparatus according to the third exemplary embodiment.
FIG. 6 is a schematic view illustrating a configuration of a water treatment apparatus according to a fourth exemplary embodiment.
FIG. 7 is a flowchart illustrating a procedure conducted by the water treatment apparatus according to the fourth exemplary embodiment.
FIG. 8 is a flowchart illustrating a procedure conducted by a water treatment apparatus according to a fifth exemplary embodiment.
FIG. 9 is a graph illustrating a relationship between an elapsed time of a regeneration process and a concentration of calcium ions contained in water discharged from a second water flow path when the regeneration process has been executed by the water treatment apparatus according to the fifth exemplary embodiment.

### DESCRIPTION OF EMBODIMENTS

Exemplary embodiments of the present disclosure will now be described with reference to the accompanying drawings. In all the drawings, identical or equivalent components are denoted by identical reference signs, and redundant descriptions thereof are omitted as appropriate. All the drawings show excerpted components necessary to describe the present disclosure and may omit other components. The exemplary embodiments described below should not be construed to limit the scope of the present disclosure.

### FIRST EXEMPLARY EMBODIMENT

A water treatment apparatus according to a first exemplary embodiment includes an electrochemical cell including: a casing provided with an inlet and an outlet; a pair of electrodes that is disposed in the casing and forms an anode and a cathode opposing each other; and an ion exchange membrane that is disposed between the anode and the cathode and has a cation exchange substrate and an anion exchange substrate. The water treatment apparatus further includes a power supply that supplies electric power to the electrodes a first water flow path connected with the inlet, a second water flow path connected with the outlet, a soft water supply unit that feeds soft water to the inlet, and a flow adjustor that is provided on the second water flow path and regulates a flow rate of water passing through the second water flow path. The water treatment apparatus further includes a controller that controls electric power supplied from the power supply to the electrodes, the flow rate of water passing through the second water flow path by use of the flow adjustor, and the soft water fed to the inlet through the soft water supply unit when a process for regenerating the anion and the cation exchange substrates is executed.

In the water treatment apparatus according to the first exemplary embodiment, the soft water supply unit may include a tank that stores water softened with the electrochemical cell and a pump that sends soft water from the tank to the inlet.

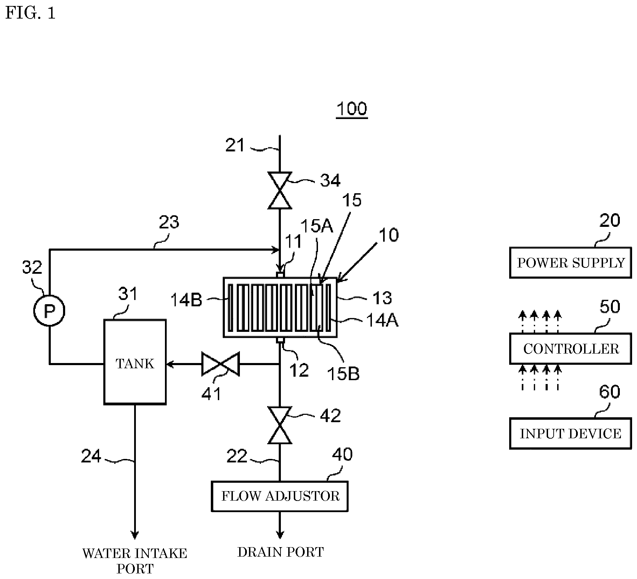

With reference to FIG. 1, one example of the water treatment apparatus according to the first exemplary embodiment will now be described.

### [Configuration of Water Treatment Apparatus]

FIG. 1 is a schematic view illustrating a configuration of a water treatment apparatus according to the first exemplary embodiment.

With reference to FIG. 1, water treatment apparatus 100 according to the first exemplary embodiment includes electrochemical cell 10, power supply 20, first water flow path 21, second water flow path 22, a soft water supply unit equipped with tank 31 and pump 32, flow adjustor 40, and controller 50. When a regeneration process is executed, controller 50 controls electric power supplied from power supply 20 to electrodes of electrochemical cell 10 and the flow rate of water passing through second water flow path 22 by flow adjustor 40. At the same time, controller 50 controls pump 32 so as to feed soft water to an inlet of electrochemical cell 10.

Electrochemical cell 10 includes casing 13, and electrode 14A, electrode 14B, and ion exchange membrane 15 that are disposed in casing 13. A first end of casing 13 is provided with inlet 11, while a second end of casing 13 is provided with outlet 12. Ion exchange membrane 15 includes anion exchange substrate (anion exchange resin) 15A and cation exchange substrate (cation exchange resin) 15B. Electrochemical cell 10 may be a publicly-known electrochemical cell, and thus detailed description thereof is omitted.

Inlet 11 of electrochemical cell 10 is connected with a downstream end of first water flow path 21. Valve 34 is provided on a middle part of first water flow path 21. Examples of valve 34 include on-off valves and flow regulating valves. Outlet 12 of electrochemical cell 10 is connected with an upstream end of second water flow path 22. A downstream end of second water flow path 22 forms a drain port.

First and second water flow paths 21 and 22 are connected via third water flow path 23. Specifically, an upstream end of third water flow path 23 is connected with a middle part of second water flow path 22, while a downstream end of third water flow path 23 is connected with a middle part of first water flow path 21.

On a middle part of third water flow path 23, first valve 41, tank 31, and pump 32 are disposed in this order. Examples of first valve 41 include on-off valves and flow regulating valves. Tank 31 stores water (hereinafter referred to as soft water) softened with electrochemical cell 10. Pump 32 feeds soft water stored in tank 31 to inlet 11 via first water flow path 21. Tank 31 is connected with an upstream end of fourth water flow path 24. A downstream end of fourth water flow path 24 forms a water intake port. This configuration enables a user of water treatment apparatus 100 to be supplied with soft water stored in tank 31.

Second water flow path 22 has flow adjustor 40 that is disposed on a part of second water flow path 22 downstream of a joint between second and third water flow paths 22 and 23 (a pipe section forming part of flow path 22). Flow adjustor 40 is any adjustor capable of regulating the flow rate of water passing through second water flow path 22, and may be made up of a flow regulating valve.

Second water flow path 22 also has second valve 42 that is disposed on a section between the connecting end of third water flow path 23 and flow adjustor 40. Examples of second valve 42 include on-off valves. The scope of the present disclosure should not be limited to the first exemplary embodiment in which flow adjustor 40 and second valve 42 are separately disposed. Flow adjustor 40 may also serve as second valve 42.

Power supply 20 may be any power supply capable of supplying electric power to electrochemical cell 10. For example, power supply 20 may be made up of a converter that converts an alternating-current (AC) voltage supplied from an AC power supply, i.e., electricity from utility power, to a direct-current (DC) voltage. Power supply 20 may be other DC power supplies such as a secondary cell.

Input device 60 is configured to set a voltage and/or an electric current, as well as a quantity of flow of water passing through second water flow path 22. Input device 60 may be designed to input a concentration of any ions contained in water treated in each of a water softening process and a regeneration process. If flow adjustor 40 is a flow regulating valve, input device 60 may be configured to input an opening degree of the valve so as to regulate the flow rate of water passing through second water flow path 22. Input device 60 may include a touchpad, a keyboard, and a remote controller.

Controller 50 controls power supply 20, flow adjustor 40 and other components that constitute water treatment apparatus 100. Controller 50 is made up of an arithmetic processor such as a microprocessor or a central processing unit (CPU), a storage unit including a memory that stores programs for executing various control operations, and a timepiece having a schedule function (all not illustrated). Controller 50 controls the operation of water treatment apparatus 100 by letting the arithmetic processor read any of predetermined control programs stored in the storage unit and execute the read programs.

Controller 50 may be made up of a group of controllers so that these controllers collaborate to control water treatment apparatus 100, other than the single controller. Controller 50 may be a microcontroller, a microprocessor unit (MPU), a programmable logic controller (PLC), or a logic circuit, for example.

### [Operation of Water Treatment Apparatus and Effects of the Same]

With reference to FIG. 1, the operation of water treatment apparatus 100 according to the first exemplary embodiment will now be described. A process for regenerating anion and cation exchange substrates 15A and 15B in electrochemical cell 10 is described below.

When an operator sets up water treatment apparatus 100, a pH or an electric conductivity of water such as tap water (hereinafter referred to as raw water) that is to be fed to electrochemical cell 10 of water treatment apparatus 100 is measured. The operator gets the measured pH or the electric conductivity to be stored on the storage unit of controller 50 via input device 60.

Controller 50 calculates set points from the input pH or the electric conductivity. The set points include a value of electric power (voltage and/or current) that is applied from power supply 20 to electrodes 14A and 14B of electrochemical cell 10 and a value of the flow rate of water that passes through second water flow path 22 when a regeneration process is executed, as well as a length of time for the regeneration process. Controller 50 stores the calculated set points on the storage unit.

Controller 50 may calculate set points for electric power so that the electric power is smaller during a predetermined length of time following the start of a regeneration process than after the elapse of the predetermined length of time. Controller 50 may calculate set points for the flow rate of water so that the water flow rate is smaller during a predetermined length of time following the start of a regeneration process than after the elapse of the predetermined length of time.

When the measured electric conductivity is low (e.g., 0.2 mS/cm or lower), controller 50 may calculate set points for the flow rate of water so that the water flow rate is higher during a predetermined length of time following the start of a regeneration process than after the elapse of the predetermined length of time.

When the process for regenerating anion and cation exchange substrates 15A and 15B is executed, controller 50 closes first valve 41 and opens second valve 42 before activating pump 32.

Controller 50 closes valve 34 and lets the soft water supply unit feed soft water stored in tank 31 first water flow path 21 to inlet 11 through third water flow path 23. This configuration can reduce the hardness and electric conductivity of water fed into electrochemical cell 10 via inlet 11.

Third water flow path 23 may have an additional valve. In the case of a region where the hardness of raw water is low (a low measured electric conductivity), controller 50 closes the valve on third water flow path 23 to stop the supply of soft water stored in tank 31 upon and after the elapse of a predetermined length of time during a regeneration process, and opens valve 34 to feed raw water into electrochemical cell 10 and go on regeneration. This configuration as well prevents an increase in the concentration of calcium ions in waste water.

Controller 50 controls power supply 20 so that electric power with a predetermined value stored in the storage unit is applied to electrodes 14A and 14B of electrochemical cell 10 and controls flow adjustor 40 so that the flow rate of water passing through second water flow path 22 reaches a predetermined flow rate stored in the storage unit.

This causes a potential difference across ion exchange membrane 15 and thereby causes dissociation of water at an interface between anion and cation exchange substrates 15A and 15B in ion exchange membrane 15. The dissociation of the water generates hydrogen ions and hydroxide ions.

Hardness ions (cations) such as calcium and magnesium absorbed into cation exchange substrate 15B are exchanged for the generated hydrogen ions and desorbed, and thus cation exchange substrate 15B is regenerated. Anions such as chloride ions absorbed into anion exchange substrate 15A are exchanged for the generated hydroxide ions and desorbed, and thus anion exchange substrate 15A is regenerated. Water that has passed through electrochemical cell 10 is discharged to the drain port via outlet 12 and second water flow path 22.

Water treatment apparatus 100 configured as described above according to the first exemplary embodiment can reduce the electric conductivity of water fed into electrochemical cell 10 via inlet 11 during a regeneration process by feeding soft water into electrochemical cell 10. This configuration prevents desorption of calcium ions in large quantity and thus restrains scale formation at the time of start of the regeneration process.

Water treatment apparatus 100 according to the first exemplary embodiment can reduce the hardness of water fed into electrochemical cell 10 via inlet 11 during a regeneration process by feeding soft water into electrochemical cell 10. This configuration can reduce the concentration of desorbed calcium ions and restrain scale formation.

Water treatment apparatus 100 according to the first exemplary embodiment may further include a water level detector disposed inside tank 31 and a valve provided on fourth water flow path 24. In this configuration, controller 50 closes the valve provided on fourth water flow path 24 to prevent soft water from being drawn through the water intake port when controller 50 detects the level of water in tank 31 via the water level detector and determines that the water level has reached or fallen below a predetermined water level. This enables tank 31 to maintain the volume of soft water necessary to regenerate electrochemical cell 10.

When a cumulative amount of soften raw water has reached a predetermined level, controller 50 may put the apparatus into a refresh mode so as to store a higher electric power or regeneration period set point for membrane regeneration than that specified for normal regeneration conditions on the storage unit and increase the quantity of calcium ions during a regeneration process. This configuration can enhance the regeneration of ion exchange membrane 15 and maintain the hardness of soft water.

### FIRST MODIFICATION EXAMPLE

A modification example of water treatment apparatus 100 according to the first exemplary embodiment is described below.

A water treatment apparatus according to a fist modification example of the first exemplary embodiment further includes a scale inhibitor supply unit that supplies a scale inhibitor to an inlet of an electrochemical cell when the regeneration process is executed.

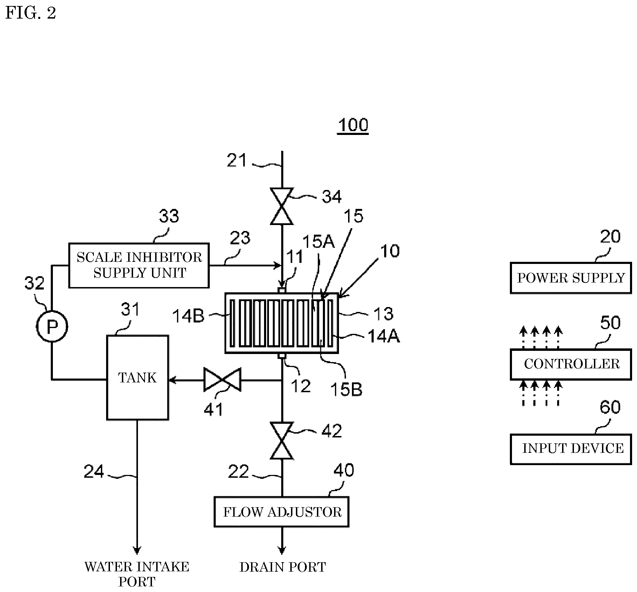

With reference to FIG. 2, one example of the water treatment apparatus according to the first modification example of the first exemplary embodiment will now be described.

FIG. 2 is a schematic view illustrating a configuration of a water treatment apparatus according to the first modification example of the first exemplary embodiment.

With reference to FIG. 2, water treatment apparatus 100 of the first modification example shares a basic configuration with water treatment apparatus 100 according to the first exemplary embodiment, but differs in that water treatment apparatus 100 of the first modification example includes scale inhibitor supply unit 33 disposed downstream of tank 31 on third water flow path 23.

Scale inhibitor supply unit 33 may be any inhibitor supply unit that can inhibit scale deposition or eliminate deposited scale. For example, a scale inhibitor may be disposed in a housing and be supplied to third water flow path 23. A scale inhibitor may be disposed inside third water flow path 23.

The scale inhibitor may be sodium polyphosphate or other polyphosphate, for example. Polyphosphate inhibits aggregation and crystal growth of CaCO3, and thus prevents CaCO3 from being deposited on membrane and other surfaces inside electrochemical cell 10.

The scale inhibitor may be a chelating agent, acrylate, or carboxylate other than polyphosphate. Any of these substances produce the similar effects described above. The apparatus may have polyphosphate or a chelating agent as a solid built into the housing and dissolve the inhibitor in water before supplying the dissolved inhibitor to electrochemical cell 10. A solution of polyphosphate, acrylate, carboxylate, or any other inhibitor stored in a chemical solution tank (not illustrated) may be diluted by a pump (not illustrated) and supplied to electrochemical cell 10.

The scale inhibitor may be an acid. The acid eliminates scale even if scale is deposited inside electrochemical cell 10 and other locations, and thus prevents the sticking of scale. An acid scale inhibitor can not only eliminate deposited CaCO3 by decomposition and dissolution but also reduce the pH of waste water at the time of membrane regeneration. Thus, the acid inhibitor can prevent the deposition of CaCO3 resulting from formation of CaCO3. The acid scale inhibitor may be citric acid, sulfamic acid, or other weak acid.

Water treatment apparatus 100 configured as described above according to the first modification example produces effects similar to those produced by water treatment apparatus 100 according to the first exemplary embodiment. Water treatment apparatus 100 of the first modification example is provided with scale inhibitor supply unit 33 and thus prevents CaCO3 formed at the time of the regeneration process from being deposited on ion exchange membrane 15 and other surfaces in electrochemical cell 10.

Water treatment apparatus 100 of the modification example includes scale inhibitor supply unit 33 disposed downstream of tank 31. As a result, water treatment apparatus 100 can restrict supply of the scale inhibitor into electrochemical cell 10 when water softening process is executed and satisfactorily supply the scale inhibitor into electrochemical cell 10 when a regeneration process is executed.

If the scale inhibitor is citric acid or other acid, controller 50 may execute a cleaning mode as described below. Specifically, when a cumulative amount of soften raw water has reached a predetermined level, controller 50 executes the cleaning mode so as to supply a citric acid or other acid with a concentration higher than a concentration specified for normal regeneration conditions from a chemical solution tank to electrochemical cell 10.
This configuration enables the elimination of CaCO3 deposited on ion exchange membrane 15 and prevents scale accumulation.

### SECOND EXEMPLARY EMBODIMENT

A water treatment apparatus according to a second exemplary embodiment includes a plurality of electrochemical cells. One of the electrochemical cells is subject to a regeneration process, whereas the other electrochemical cell configures a soft water supply unit.

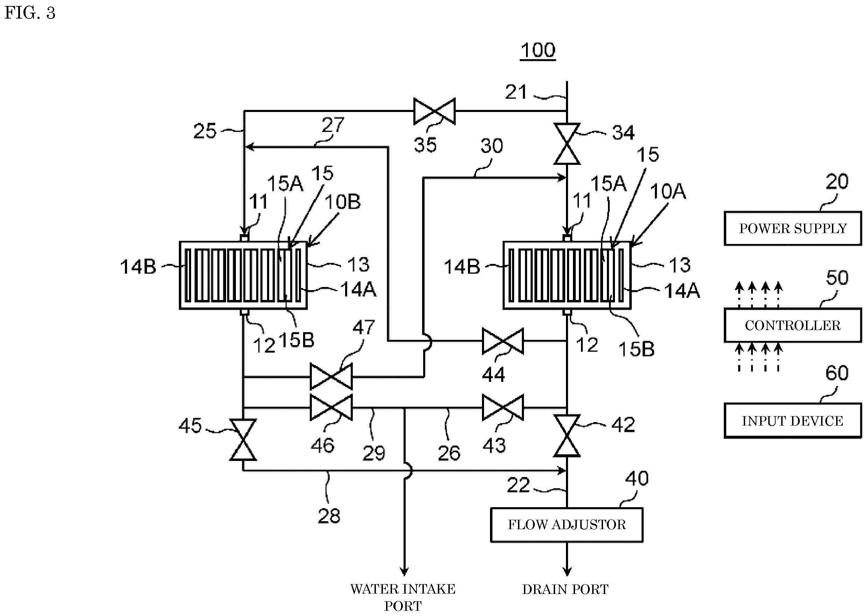

With reference to FIG. 3, one example of water treatment apparatus according to the second exemplary embodiment will now be described.

### [Water Treatment Configuration]

FIG. 3 is a schematic view illustrating a configuration of a water treatment apparatus according to the second exemplary embodiment.

With reference to FIG. 3, water treatment apparatus 100 according to the second exemplary embodiment shares a basic configuration with water treatment apparatus 100 according to the first exemplary embodiment, but differs in that water treatment apparatus 100 of the second exemplary embodiment includes a plurality of electrochemical cells (two electrochemical cells 10A, 10B in this example), and one of the electrochemical cells (e.g. electrochemical cell 10A) is subject to a regeneration process whereas the other electrochemical cell (e.g. electrochemical cell 10B) constitutes a water softening device.

Specifically, inlet 11 of electrochemical cell 10A is connected with a downstream end of first water flow path 21. Outlet 12 of electrochemical cell 10A is connected with an upstream end of second water flow path 22. Flow adjustor 40 is provided on a middle part of second water flow path 22.

Second water flow path 22 has second valve 42 that is disposed upstream of flow adjustor 40. An upstream end of sixth water flow path 26 is connected with a part of second water flow path 22 upstream of second valve 42. A downstream end of sixth water flow path 26 forms a water outlet. Third valve 43 is provided on a middle part of sixth water flow path 26. Examples of third valve 43 include open-close valves and flow regulating valves. The scope of the present disclosure should not be limited to the second exemplary embodiment in which second valve 42 and third valve 43 are disposed. Second and third valves 42 and 43 may be replaced with a three-way valve disposed on a joint between second and sixth water flow paths 22 and 26.

Apart of second water flow path 22 upstream of the joint between second and sixth water flow paths 22 and 26 is connected with an upstream end of seventh water flow path 27. A downstream end of seventh water flow path 27 is connected with a middle part of fifth water flow path 25. Fourth valve 44 is provided on a middle part of seventh water flow path 27. Examples of fourth valve 44 include open-close valves and flow regulating valves.

A middle part of first water flow path 21 is connected with an upstream end of fifth water flow path 25. A downstream end of fifth water flow path 25 is connected with inlet 11 of electrochemical cell 10B. Valve 35 is provided on a middle part of fifth water flow path 25. Examples of valve 35 include open-close valves and flow regulating valves.

Outlet 12 of electrochemical cell 10B is connected with an upstream end of eighth water flow path 28. A downstream end of eighth water flow path 28 is connected with a part of second water flow path 22 between second valve 42 and flow adjustor 40.

Fifth valve 45 is provided on a middle part of eighth water flow path 28. Examples of fifth valve 45 include open-close valves and flow regulating valves. A part of eighth water flow path 28 upstream of fifth valve 45 is connected with an upstream end of ninth water flow path 29. A downstream end of ninth water flow path 29 is connected with a part of sixth water flow path 26 downstream of third valve 43. Sixth valve 46 is provided on a middle part of ninth water flow path 29. Examples of sixth valve 46 include open-close valves and flow regulating valves. The scope of the present disclosure should not be limited to the second exemplary embodiment in which fifth valve 45 and sixth valve 46 are disposed. Fifth and sixth valves 45 and 46 may be replaced with a three-way valve disposed on a joint between eighth and ninth water flow paths 28 and 29.

A part of eighth water flow path 28 upstream of the joint between eighth and ninth water flow paths 28 and 29 is connected with an upstream end of tenth water flow path 30. A downstream end of tenth water flow path 30 is connected with a part of first water flow path 21 downstream of a joint between first and fifth water flow paths 21 and 25. Seventh valve 47 is provided on a middle part of tenth water flow path 30. Examples of seventh valve 47 include open-close valves and flow regulating valves.

### [Operation of Water Treatment Apparatus and Effects of the Same]

With reference to FIG. 3, the operation of water treatment apparatus 100 according to the second exemplary embodiment will now be described. A process for regenerating anion and cation exchange substrates 15A and 15B in electrochemical cell 10A is described below.

In like manner with water treatment apparatus 100 according to the first exemplary embodiment, when an operator sets up water treatment apparatus 100 of the second exemplary embodiment, a pH or an electric conductivity of raw water that is to be fed to electrochemical cell 10 of water treatment apparatus 100 is measured. The operator gets the measured pH or the electric conductivity to be stored on a storage unit of controller 50 via input device 60.

Controller 50 calculates set points from the input pH or the electric conductivity. The set points include a value of electric power (voltage and/or current) that is applied (supplied) from power supply 20 to electrodes 14A and 14B of electrochemical cells 10A, 10B and a value of the flow rate of water that passes through second water flow path 22 when a regeneration process is executed, as well as a length of time for the regeneration process. Controller 50 stores the calculated set points on the storage unit.

When the process for regenerating anion and cation exchange substrates 15A and 15B in electrochemical cell 10A is executed, controller 50 opens second valve 42 and closes third and fourth valves 43 and 44. This configuration allows water that has passed through electrochemical cell 10A to flow through second water flow path 22 and be discharged out of a drain port.

Controller 50 closes fifth and sixth valves 45 and 46, and opens seventh valve 47. Then, controller 50 gets a voltage to be applied to electrochemical cells 10A and 10B, and raw water to be fed to electrochemical cells 10A and 10B. The voltage is applied so that electrode 14A and electrode 14B of electrochemical cell 10A form an anode and a cathode, respectively, and electrode 14A and electrode 14B of electrochemical cell 10B form a cathode and an anode, respectively.

Controller 50 controls power supply 20 so that electric power with a predetermined value stored in the storage unit is applied to the electrodes of electrochemical cell 10 and controls flow adjustor 40 so that the flow rate of water passing through second water flow path 22 reaches a predetermined flow rate stored in the storage unit.

Consequently, hardness ions (cations) contained in the raw water that is fed into electrochemical cell 10B are removed and absorbed into cation exchange substrate 15B, while anions such as chloride ions contained in the raw water are removed and absorbed into anion exchange substrate 15A. This processing softens the water (generation of soft water).

Soft water generated in electrochemical cell 10B is fed to first water flow path 21 through outlet 12, and eighth and tenth water flow paths 28 and 30. Both the soft water fed to first water flow path 21 and raw water flowing through first water flow path 21 are fed to inlet 11 of electrochemical cell 10A. This configuration can reduce the hardness and electric conductivity of water fed into electrochemical cell 10A via inlet 11.

The quantity of soft water passing through tenth water flow path 30 and the quantity of raw water passing through first water flow path 21 may be adjusted as appropriate by opening or closing at least one of seventh valve 47 and valve 35. As a result, the hardness and electric conductivity of water fed into electrochemical cell 10 via inlet 11 may be adjusted.

In electrochemical cell 10A, anion and cation exchange substrates 15A and 15B are regenerated. Water that has passed through electrochemical cell 10A is discharged to the drain port via outlet 12 of electrochemical cell 10A and second water flow path 22.

Water treatment apparatus 100 configured as described above according to the second exemplary embodiment produces effects similar to those produced by water treatment apparatus 100 according to the first exemplary embodiment.

Water treatment apparatus 100 according to the second exemplary embodiment closes sixth valve 46 when the regeneration process is executed. However, the scope of the present disclosure should not be limited to this configuration. Sixth valve 46 may be opened to allow the intake of soft water, with proviso that the flow of the water is small. In this case, soft water can be taken from the apparatus even during a regeneration process.

### THIRD EXEMPLARY EMBODIMENT

A water treatment apparatus according to a third exemplary embodiment includes a conductivity detector that detects an electric conductivity of water passing through a second water flow path. A controller controls electric power supplied from a power supply to electrodes and the flow rate of water passing through the second water flow path by use of a flow adjustor so that the electric conductivity detected by the conductivity detector is lower than a first threshold.

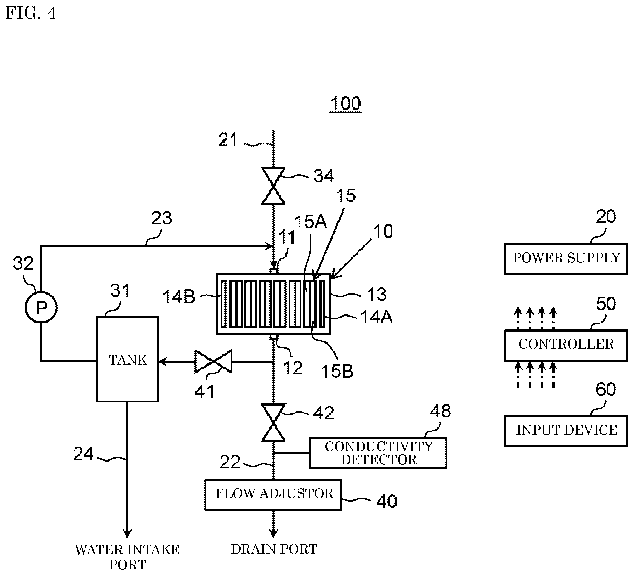

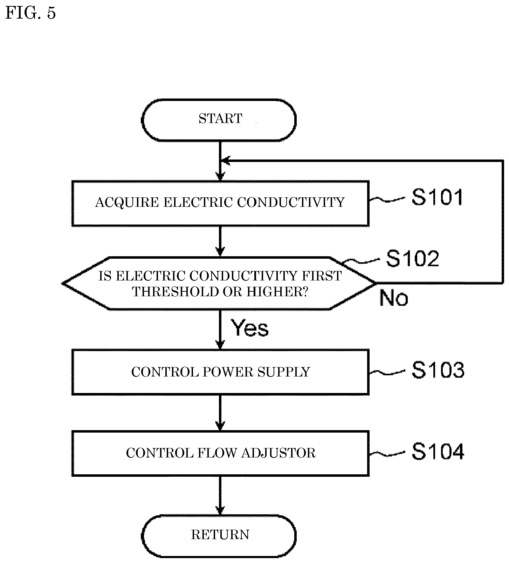

With reference to FIGS. 4 and 5, one example of a water treatment apparatus according to the third exemplary embodiment will now be described.

### [Configuration of Water Treatment Apparatus]

FIG. 4 is a schematic view illustrating a configuration of the water treatment apparatus according to the third exemplary embodiment.

With reference to FIG. 4, the water treatment apparatus according to the third exemplary embodiment shares a basic configuration with water treatment apparatus 100 according to the first exemplary embodiment, but differs in that water treatment apparatus 100 of the third exemplary embodiment further includes conductivity detector 48. Conductivity detector 48 is provided on a part of second water flow path 22 upstream of flow adjustor 40.

Conductivity detector 48 may be any detector that can detect electric conductivity of water passing through second water flow path 22 and output the detected conductivity to controller 50. For example, conductivity detector 48 may be a publicly-know conductivity detector, or a detector that detects the temperature of water passing through second water flow path 22 and corrects electric conductivity.

### [Operation of Water Treatment Apparatus and Effects of the Same]

With reference to FIGS. 4 and 5, the operation of water treatment apparatus 100 according to the third exemplary embodiment will now be described. A process for regenerating anion and cation exchange substrates 15A and 15B in electrochemical cell 10 is described below.

FIG. 5 is a flowchart illustrating a procedure conducted by the water treatment apparatus according to the third exemplary embodiment.

With reference to FIG. 5, controller 50 starts a process for regenerating electrochemical cell 10, and acquires an electric conductivity that is detected by conductivity detector 48 and sent from conductivity detector 48 (step S101). In like manner with water treatment apparatus 100 according to the first exemplary embodiment, controller 50 in the present exemplary embodiment controls power supply 20 so that electric power with a predetermined value stored in a storage unit is applied to the electrodes of electrochemical cell 10 and controls flow adjustor 40 so that the flow rate of water passing through second water flow path 22 reaches a predetermined flow rate stored in the storage unit. Controller 50 ends the regeneration process when the time elapsed from the start of the regeneration process has reached a predetermined regeneration time length stored in the storage unit.

Next, controller 50 determines whether the electric conductivity acquired in step S101 is higher than or equal to a first threshold (step S102). The first threshold is a value determined by experiment or testing in advance. The first threshold may be higher than or equal to an electric conductivity of water used for membrane regeneration plus 0.2 mS/cm from the viewpoint of efficient regeneration, or lower than or equal to 5.0 mS/cm from the viewpoint of restraint on scale formation in electrochemical cell 10 and other locations.

If the electric conductivity acquired in step S101 is lower than the first threshold (No in step S102), controller 50 goes back to step S101 and repeats steps S101 and S102 until the electric conductivity acquired in step S101 reaches the first threshold or higher. If the electric conductivity acquired in step S101 is the first threshold or higher (Yes in step S102), controller 50 goes to step S103.

In step S103, controller 50 regulates power supply 20. Specifically, controller 50 controls power supply 20 so that the electric power (voltage and/or current) applied from power supply 20 to electrodes 14A and 14B of electrochemical cell 10 falls below a predetermined value stored in the storage unit and an operation period of power supply 20 is extended.

Next, controller 50 controls flow adjustor 40 (step S104) and goes back to step S101. Specifically, controller 50 controls flow adjustor 40 so that the flow rate of water passing through second water flow path 22 reaches or falls below a predetermined flow rate stored in the storage unit.

Water treatment apparatus 100 configured as described above according to the third exemplary embodiment produces effects similar to those produced by water treatment apparatus 100 according to the first exemplary embodiment.

In water treatment apparatus 100 according to the third exemplary embodiment, controller 50 controls power supply 20 and flow adjustor 40 during the process for regenerating electrochemical cell 10 so that the electric conductivity is lower than the first threshold. As a result, water treatment apparatus 100 in this exemplary embodiment can restrain scale formation in electrochemical cell 10 and other locations more satisfactorily than water treatment apparatus 100 according to the first exemplary embodiment can. This configuration facilitates reduction in the quantity of water discharged at the time of the regeneration process and enables the efficient regeneration.

### FOURTH EXEMPLARY EMBODIMENT

A water treatment apparatus according to a fourth exemplary embodiment further includes a pH detector that detects a pH of water passing through a second water flow path. A controller controls electric power supplied from a power supply to electrodes and the flow rate of water passing through the second water flow path by use of a flow adjustor so that the pH detected by the pH detector is lower than a second threshold.

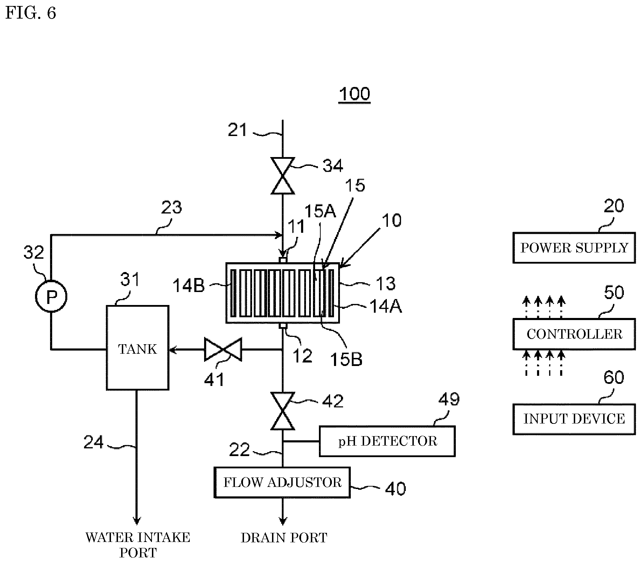

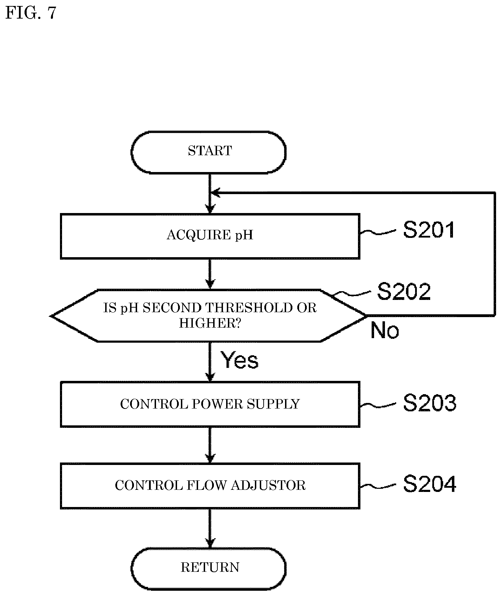

With reference to FIGS. 6 and 7, one example of the water treatment apparatus according to the fourth exemplary embodiment will now be described.

### [Configuration of Water Treatment Apparatus]

FIG. 6 is a schematic view illustrating a configuration of the water treatment apparatus according to the fourth exemplary embodiment.

With reference to FIG. 6, the water treatment apparatus according to the fourth exemplary embodiment shares a basic configuration with water treatment apparatus 100 according to the first exemplary embodiment, but differs in that water treatment apparatus 100 of the fourth exemplary embodiment further includes pH detector 49. pH detector 49 is provided on a part of second water flow path 22 upstream of flow adjustor 40.

pH detector 49 may be any detector that can detect the pH of water passing through second water flow path 22 and output the detected pH to controller 50. For example, pH detector 49 may be a publicly-know pH detector.

### [Operation of Water Treatment Apparatus and Effects of the Same]

With reference to FIGS. 6 and 7, the operation of water treatment apparatus 100 according to the fourth exemplary embodiment will now be described. The process for Regenerating anion and cation exchange substrates 15A and 15B in electrochemical cell 10 is described below.

FIG. 7 is a flowchart illustrating a procedure conducted by the water treatment apparatus according to the fourth exemplary embodiment.

With reference to FIG. 7, controller 50 starts a process for regenerating electrochemical cell 10, and acquires a pH that is detected by pH detector 49 and sent from pH detector 49 (step S201). In like manner with water treatment apparatus 100 according to the first exemplary embodiment, controller 50 in the present exemplary embodiment controls power supply 20 so that electric power with a predetermined value stored in a storage unit is applied to the electrodes of electrochemical cell 10 and controls flow adjustor 40 so that the flow rate of water passing through second water flow path 22 reaches a predetermined flow rate stored in the storage unit. Controller 50 ends the regeneration process when the time elapsed from the start of the regeneration process has reached a predetermined regeneration time length stored in the storage unit.

Next, controller 50 determines whether the pH acquired in step S201 is higher than or equal to a second threshold (step S202). The second threshold is a value determined by experiment or testing in advance. The second threshold may be higher than a pH of water used for membrane regeneration from the viewpoint of an efficient regeneration process, or lower than or equal to 12 from the viewpoint of restraint on scale formation in electrochemical cell 10 and other locations, for example.

If the pH acquired in step S201 is lower than the second threshold (No in step S202), controller 50 goes back to step S201 and repeats steps S201 and S202 until the pH acquired in step S201 reaches the second threshold or higher. If the pH acquired in step S201 is the second threshold or higher (Yes in step S202), controller 50 goes to step S203.

In step S203, controller 50 regulates power supply 20. Specifically, controller 50 controls power supply 20 so that the electric power (voltage and/or current) applied from power supply 20 to electrodes 14A and 14B of electrochemical cell 10 falls below a predetermined value stored in the storage unit and an operation period of power supply 20 is extended.

Next, controller 50 controls flow adjustor 40 (step S204) and goes back to step S201. Specifically, controller 50 controls flow adjustor 40 so that the flow rate of water passing through second water flow path 22 reaches or falls below a predetermined flow rate stored in the storage unit.

Water treatment apparatus 100 configured as described above according to the fourth exemplary embodiment produces effects similar to those produced by water treatment apparatus 100 according to the first exemplary embodiment.

In water treatment apparatus 100 according to the fourth exemplary embodiment, controller 50 controls power supply 20 and flow adjustor 40 during the process for regenerating electrochemical cell 10 so that the pH is lower than the second threshold. As a result, water treatment apparatus 100 in this exemplary embodiment can restrain scale formation in electrochemical cell 10 and other locations more satisfactorily than water treatment apparatus 100 according to the first exemplary embodiment can. This configuration facilitates reduction in the quantity of water discharged at the time of the regeneration process and enables the efficient regeneration.

### FIFTH EXEMPLARY EMBODIMENT

In a water treatment apparatus according to a fifth exemplary embodiment, a controller controls a soft water supply unit so that soft water supply unit feeds soft water to an inlet when a regeneration process is executed. The controller also controls a power supply to supply electric power rated below a third threshold to electrodes and controls a flow adjustor so that the flow rate of water passing through a second water flow path is lower than a fourth threshold when a regeneration process is executed. Thereafter, the controller controls the power supply so that supply electric power rated at the third threshold or higher is supplied to the electrodes and controls the flow adjustor so that the flow rate of water passing through the second water flow path is the fourth threshold or higher.

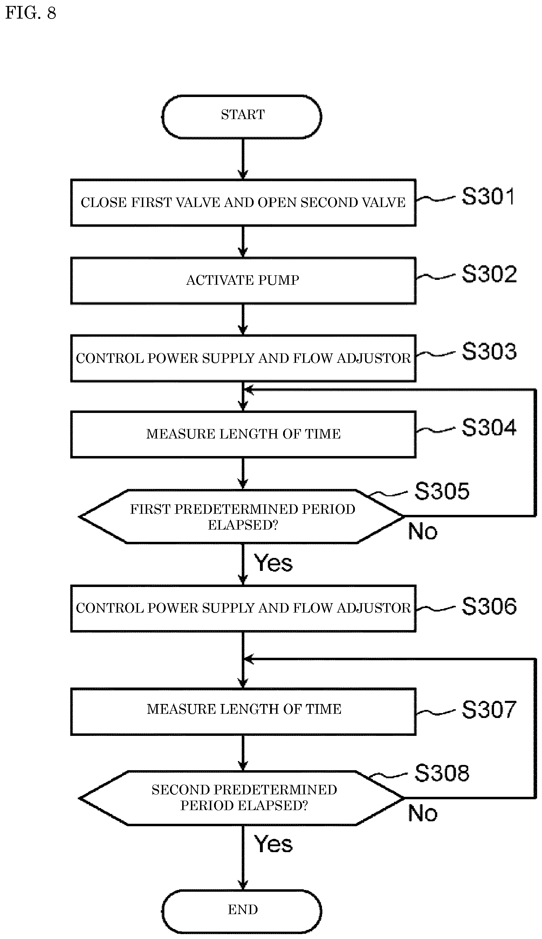

With reference to FIG. 8, one example of water treatment apparatus according to the fifth exemplary embodiment will now be described. Since the water treatment apparatus according to the fifth exemplary embodiment has a configuration identical to that of the water treatment apparatus according to the first exemplary embodiment, detailed description thereof is omitted. A process for regenerating anion and cation exchange substrates 15A and 15B in electrochemical cell 10 is described below.

### [Operation of Water Treatment Apparatus]

FIG. 8 is a flowchart illustrating a procedure executed by the water treatment apparatus according to the fifth exemplary embodiment. The apparatus executes the procedure described below by letting an arithmetic processor of controller 50 execute a program stored in a storage unit.

With reference to FIG. 8, controller 50 closes first valve 41 and opens second valve 42 (step S301). Then, controller 50 activates pump 32 (step S302). As a result, soft water stored in tank 31 is fed to first water flow path 21 through third water flow path 23. Both the soft water fed to first water flow path 21 and raw water flowing through first water flow path 21 are fed to inlet 11.

Next, controller 50 controls power supply 20 and flow adjustor 40 (step S303). Specifically, controller 50 controls power supply 20 so that the electric power (voltage and/or current) applied from power supply 20 to electrodes 14A and 14B of electrochemical cell 10 falls below a third threshold stored in the storage unit. The third threshold is a value determined by experiment or testing in advance. The third threshold may be a current ranging from 0.1 A to 40 A inclusive specified from the viewpoint of restraint on desorption of calcium ions in large quantity and prevention of the occurrence of an overcurrent.

Controller 50 controls flow adjustor 40 so that the flow rate of water passing through second water flow path 22 falls below a fourth threshold stored in the storage unit. The fourth threshold is a value determined by experiment or testing in advance, and may range from 0.5 L/min to 30 L/min inclusive specified from the viewpoint of restraint on desorption of calcium ions in large quantity and prevention of the occurrence of an overcurrent.

Controller 50 measures a length of time that has elapsed from the start of step S303 for controlling power supply 20 and flow adjustor 40 (step S304). Controller 50 determines whether the time elapsed from the start of step S303 is equal to or longer than a first predetermined period (step S305). The first predetermined period is a value determined by experiment or testing in advance. The first predetermined period may range from 1 min to 60 min inclusive from the viewpoint of restraint on scale formation in electrochemical cell 10 and other locations, or range from 2 min to 20 min inclusive from the viewpoint of an efficient regeneration process.

If the time elapsed from the start of step S303 is not equal to or longer than the first predetermined period (No in step S305), controller 50 repeats steps S304 and S305 until the time elapsed from the start of step S303 reaches or exceeds the first predetermined period. If the time elapsed from the start of step S303 is equal to or longer than the first predetermined period (Yes in step S305), controller 50 goes to step S306.

In step S306, controller 50 controls power supply 20 so that the electric power (voltage and/or current) applied from power supply 20 to electrodes 14A and 14B of electrochemical cell 10 reaches or exceeds the third threshold. Controller 50 controls flow adjustor 40 so that the flow rate of water passing through second water flow path 22 reaches or exceeds the fourth threshold.

When the apparatus includes a conductivity detector that detects the electric conductivity of water passing through second water flow path 22, controller 50 may, in response to a low electric conductivity detected by the conductivity detector, control flow adjustor 40 so that the flow rate of water passing through second water flow path 22 is equal to or falls below the fourth threshold.

Controller 50 measures a length of time that has elapsed from the start of step S306 for controlling power supply 20 and flow adjustor 40 (step S307). Controller 50 determines whether the time elapsed from the start of step S306 is equal to or longer than a second predetermined period (step S308). The second predetermined period is a value determined by experiment or testing in advance. The second predetermined period may range from 1 min to 60 min inclusive from the viewpoint of satisfactory regeneration of the ion exchange membrane in electrochemical cell 10, or range from 2 min to 20 min inclusive from the viewpoint of an efficient regeneration process.

If the time elapsed from the start of step S306 is not equal to or longer than the second predetermined period (No in step S308), controller 50 repeats steps S307 and S308 until the time elapsed from the start of step S306 reaches or exceeds the second predetermined period. If the time elapsed from the start of step S306 is equal to or longer than the second predetermined period (Yes in step S308), controller 50 terminates the program (the regeneration process). After that, controller 50 may start water softening or interrupt the supply of electric power to electrodes 14A and 14B of electrochemical cell 10 to deactivate the water treatment apparatus.

### [Effects of Water Treatment Apparatus]

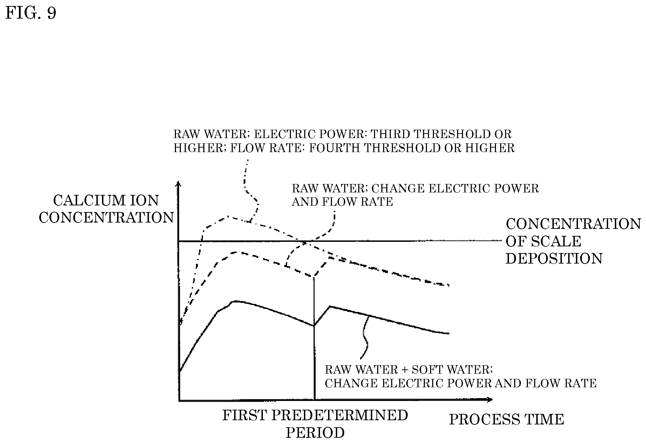

With reference to FIGS. 8 and 9, effects produced by the water treatment apparatus according to the fifth exemplary embodiment will now be described.

FIG. 9 is a graph illustrating a relationship between the elapsed time of a regeneration process and a concentration of calcium ions contained in water discharged from the second water flow path when the regeneration process has been executed by the water treatment apparatus according to the fifth exemplary embodiment.

With reference to FIG. 9, a dot-and-dash line represents an instance in which raw water alone is fed to electrochemical cell 10, electric power rated at the third threshold or higher is applied from power supply 20 to electrodes 14A and 14B, and the flow rate of water passing through second water flow path 22 is the fourth threshold or higher throughout a regeneration process. In this instance, calcium ions absorbed into anion exchange substrate 15A are emitted into the raw water after start of the regeneration process. Thus, calcium ions contained in water discharged from the second water flow path had a concentration greater than or equal to a degree that causes scale deposition and might result in the deposition of scale in electrochemical cell 10 and other locations.

Meanwhile, a dashed line in FIG. 9 represents an instance in which raw water alone is fed to electrochemical cell 10 while the electric power supplied from power supply 20 is rated below the third threshold and the water flow rate is lower than the fourth threshold during the first predetermined period following start of a regeneration process, and the electric power supplied from power supply 20 is rated at the third threshold or higher and the water flow rate is the fourth threshold or higher after the first predetermined period. In this instance, calcium ions absorbed into anion exchange substrate 15A are emitted at a restrained level after start of the regeneration process. Thus, calcium ions contained in water discharged from the second water flow path have a concentration lower than the degree that causes scale deposition. This inhibited scale deposition.

A solid line in FIG. 9 represents an instance shown by water treatment apparatus 100 according to the fifth exemplary embodiment, in which the procedure involves feeding both raw water and soft water to electrochemical cell 10 while supplying electric power rated below the third threshold from power supply 20 and regulating the water flow rate to below the fourth threshold during the first predetermined period following start of a regeneration process and supplying electric power rated at the third threshold or higher from power supply 20 and regulating the water flow rate to the fourth threshold or higher after the first predetermined period. In this instance, hardness and conductivity can be lower for water fed to electrochemical cell 10 than for raw water. Thus, this procedure enables the concentration of calcium ions contained in water discharged from the second water flow path to be lower than the concentration in the instance (the dashed line in FIG. 9) in which raw water alone is fed.

Consequently, water treatment apparatus 100 according to the fifth exemplary embodiment can restrain scale formation in electrochemical cell 10 and other locations more satisfactorily than water treatment apparatus 100 according to the first exemplary embodiment.

In view of the foregoing description, numerous modifications and alternative exemplary embodiments of the disclosure will be apparent to those skilled in the art. Accordingly, this description is to be construed as illustrative only and is for the purpose of teaching those skilled in the art the best mode of carrying out the disclosure. Details of the structure and/or the function may be varied substantially without departing from the spirit of the disclosure. Moreover, other aspects of the present disclosure can be achieved by appropriately combining constituents that are disclosed in the exemplary embodiments described above.

### INDUSTRIAL APPLICABILITY

A water treatment apparatus of the present disclosure can reduce the hardness and electric conductivity of water fed into an electrochemical cell during regeneration of an ion exchange membrane. As a result, the apparatus can restrain scale formation and thus be useful for water treatment applications.

### REFERENCE MARKS IN THE DRAWINGS

10: electrochemical cell
10A: electrochemical cell
10B: electrochemical cell
11: inlet
12: outlet
13: casing
14A: electrode
14B: electrode
15: ion exchange membrane
15A: anion exchange substrate
15B: cation exchange substrate
20: power supply
21: first water flow path
22: second water flow path
23: third water flow path
24: fourth water flow path
25: fifth water flow path
26: sixth water flow path
27: seventh water flow path
28: eighth water flow path
29: ninth water flow path
30: tenth water flow path
31: tank
32: pump
33: scale inhibitor supply unit
40: flow adjustor
41: first valve
42: second valve
43: third valve
44: fourth valve
45: fifth valve
46: sixth valve
47: seventh valve
48: conductivity detector
49: pH detector
50: controller
60: input device
100: water treatment apparatus

## Claims

1. A water treatment apparatus comprising:
an electrochemical cell including
a casing provided with an inlet and an outlet,
a pair of electrodes disposed in the casing, the electrodes forming an anode and a cathode opposing each other, and
an ion exchange membrane disposed between the anode and the cathode, the ion exchange membrane including a cation exchange substrate and an anion exchange substrate;
a power supply that supplies electric power to the electrodes;
a first water flow path connected with the inlet;
a second water flow path connected with the outlet;
a soft water supply unit that feeds soft water to the inlet;
a flow adjustor that is provided on the second water flow path and regulates a flow rate of water passing through the second water flow path; and
a controller that controls electric power supplied from the power supply to the electrodes, the flow rate of water passing through the second water flow path by use of the flow adjustor, and the soft water fed to the inlet by use of the soft water supply unit when a process for regenerating the anion and the cation exchange substrates is executed.

2. The water treatment apparatus according to claim 1, wherein
the soft water supply unit includes
a tank in which water softened by the electrochemical cell is stored, and
a pump that sends the soft water from the tank to the inlet.

3. The water treatment apparatus according to claim 1 or 2, comprising
a plurality of the electrochemical cells,
wherein
one of the electrochemical cells is subject to the regeneration process, and the soft water supply unit is configured with the other electrochemical cell.

4. The water treatment apparatus according to any one of claims 1 to 3, further comprising
a scale inhibitor supply unit that supplies a scale inhibitor to the inlet when the regeneration process is executed.

5. The water treatment apparatus according to any one of claims 1 to 4, further comprising
a conductivity detector that detects electric conductivity of water passing through the second water flow path,
wherein
the controller controls electric power supplied from the power supply to the electrodes and the flow rate of water passing through the second water flow path by use of the flow adjustor so that the electric conductivity detected by the conductivity detector is lower than a first threshold.

6. The water treatment apparatus according to any one of claims 1 to 5, further comprising
a pH detector that detects a pH of water passing through the second water flow path,
wherein
the controller controls electric power supplied from the power supply to the electrodes and the flow rate of water passing through the second water flow path by use of the flow adjustor so that the pH detected by the pH detector is lower than a second threshold.

7. The water treatment apparatus according to any one of claims 1 to 6, wherein
the controller controls the soft water fed to the inlet by use of the soft water supply unit when the regeneration process is executed,
the controller controls the power supply so that electric power rated below a third threshold is supplied to the electrodes and controls the flow adjustor so that the flow rate of water passing through the second water flow path is less than a fourth threshold, and
then the controller controls the power supply so that electric power rated at the third threshold or higher is supplied to the electrodes and controls the flow adjustor so that the flow rate of water passing through the second water flow path is the fourth threshold or higher.

8. A method for operating a water treatment apparatus, the water treatment apparatus including:
an electrochemical cell including
a casing provided with an inlet and an outlet,
a pair of electrodes disposed in the casing, the electrodes forming an anode and a cathode opposite to each other, and
an ion exchange membrane disposed between the anode and the cathode, the ion exchange membrane including a cation exchange substrate and an anion exchange substrate;
a power supply that supplies electric power to the electrodes;
a first water flow path connected with the inlet;
a second water flow path connected with the outlet;
a soft water supply unit that feeds soft water to the inlet; and
a flow adjustor that is provided on the second water flow path and regulates a flow rate of water passing through the second water flow path,
the method comprising:
a step A of adjusting electric power supplied from the power supply to the electrodes,
a step B of regulating the flow rate of water passing through the second water flow path by use of the flow adjustor; and
a step C of feeding the soft water to the inlet by use of the soft water supply unit.

## Amended claims

### Amended claims under Art. 19.1 PCT

1. (currently amended) A water treatment apparatus comprising:
an electrochemical cell including
a casing provided with an inlet and an outlet,
a pair of electrodes disposed in the casing, the electrodes forming an anode and a cathode opposing each other, and
an ion exchange membrane disposed between the anode and the cathode, the ion exchange membrane including a cation exchange substrate and an anion exchange substrate;
a power supply that supplies electric power to the electrodes;
a first water flow path connected with the inlet;
a second water flow path connected with the outlet;
a soft water supply unit that feeds soft water to the inlet;
a flow adjustor that is provided on the second water flow path and regulates a flow rate of water passing through the second water flow path;
a controller that controls electric power supplied from the power supply to the electrodes, the flow rate of water passing through the second water flow path by use of the flow adjustor, and the soft water fed to the inlet by use of the soft water supply unit when a process for regenerating the anion and the cation exchange substrates is executed; and
a scale inhibitor supply unit that supplies a scale inhibitor to the inlet when the regeneration process is executed.

2. The water treatment apparatus according to claim 1, wherein
the soft water supply unit includes
a tank in which water softened by the electrochemical cell is stored, and
a pump that sends the soft water from the tank to the inlet.

3. The water treatment apparatus according to claim 1 or 2, comprising
a plurality of the electrochemical cells, wherein one of the electrochemical cells is subject to the regeneration process, and the soft water supply unit is configured with the other electrochemical cell.

4. (canceled)

5. (currently amended) The water treatment apparatus according to any one of claims 1 to 3, further comprising
a conductivity detector that detects electric conductivity of water passing through the second water flow path,
wherein
the controller controls electric power supplied from the power supply to the electrodes and the flow rate of water passing through the second water flow path by use of the flow adjustor so that the electric conductivity detected by the conductivity detector is lower than a first threshold.

6. (currently amended) The water treatment apparatus according to any one of claims 1 to 3 and 5, further comprising
a pH detector that detects a pH of water passing through the second water flow path, wherein the controller controls electric power supplied from the power supply to the electrodes and the flow rate of water passing through the second water flow path by use of the flow adjustor so that the pH detected by the pH detector is lower than a second threshold.

7. (currently amended) The water treatment apparatus according to any one of claims 1 to 3 and 5 to 6, wherein
the controller controls the soft water fed to the inlet by use of the soft water supply unit when the regeneration process is executed,
the controller controls the power supply so that electric power rated below a third threshold is supplied to the electrodes and controls the flow adjustor to regulate the flow rate of water passing through the second water flow path to less than a fourth threshold, and
then the controller controls the power supply so that electric power rated at the third threshold or higher is supplied to the electrodes and controls the flow adjustor so that the flow rate of water passing through the second water flow path is the fourth threshold or higher.

8. (canceled)
